# EUROPEAN PATENT APPLICATION

(11) **EP 1 180 803 A1**
(43) Date of publication of application: **20.02.2002**
(21) Application number: 00202784.5
(22) Date of filing: 07.08.2000
(51) Int. Cl.: H01L 31/04

(54) **Thermophotovoltaic conversion module**

(71) Applicant: ABB Research Ltd., 8050 Zürich (CH)
(72) Inventor: Malfa, Enrico, 24059 Zanica (BG) (IT); Sciacca, Aldo, 20097 San Donato Milanese (MI) (IT)
(74) Representative: Giavarini, Francesco

(57) **Abstract**

A TPV conversion module comprising an emitter body (21) for emitting an IR radiation, and a receiver body (24), comprising a plurality of TPV cells (25) for converting into electric power, at least a portion the IR radiation, which is provided by said emitter body. The emitter body comprises at least an emitting wall (26) which comprises at least a concave-shaped surface, which emits an IR radiation (19) outwardly from the emitter body.

## Description

The present invention relates to an improved thermophotovoltaic (TPV) conversion module. More particularly, the present invention relates to a TPV conversion module, which is suitable for the use in TPV apparatuses for the generation of electric power.

It is known that systems for the distributed generation of electric power have had a large diffusion in the market, in the last years. Distributed generation (DG) systems are mainly aimed at generating electric power in the proximity of the final user, avoiding the need of an electric power distribution network.

Distributed generation of electric power is generally adopted also in combined-heat-power (CHP) systems and in combined-heat-cold-power (CHCP) systems, which refer to the simultaneous production of electric power, hot water and steam for heating or cooling purposes.

A wide range of electric power may be covered: from few hundreds watts (domestic applications) to several megawatts (huge industrial plants), depending on the needs. In the past, there have been different types of electric power generation methods, in the field of the distributed generation. These methods employ traditionally internal combustion engines (ICE) or turbo-machines.

Both these methods have some disadvantages mainly related to the fact of using apparatuses, which are provided with moving parts and therefore are subjected to wear problems, high noise levels, frequent maintenance interventions and the like.

Beside these traditional methods, some alternative methods, which imply a "static" generation of electric power, have been developed. Among these, the methods, which use a solar photovoltaic (PV) conversion for generating electric power, have to be mentioned. Solar PV converters are extensively used in low-medium scale electric power distributed generation systems. Thanks to absence of moving parts, they allow overcoming most of the disadvantages that are proper of the methods employing ICE or turbo-machines. Similarly to the PV conversion, also to the thermophotovoltaic (TPV) electric power conversion avoids the use of moving parts within an electric power generator. In fact, TPV electric power generation is based upon the positioning semiconductor TPV cells, which are structured similarly to the well known solar cells, in the photon flux field of a high temperature photon emitter. In practice, TPV electric power generation is based on the conversion of infrared (IR) radiation, which is emitted by a heat source. The development of selected emitters able to emit a narrow-band IR radiation and of TPV cells adopting proper semiconductor materials, such as those compounds (Ge, GaAs, GaSb, InGaSb, InGaAsSb and the like) of the III-V groups, have allowed reaching high power density levels (higher than 1W/cm²) and high efficiency (around 10%). Therefore, TPV electric power generation has shown to be attractive for the relatively reduced size, installation and maintenance costs of the TPV generation apparatuses, keeping unchanged, at the same time, the advantages that are proper of the PV technology.

Several TPV apparatuses have been developed in the state of the art.

Traditionally, a TPV apparatus comprises a burner device, which generates, by means of the combustion of fuel and air, hot gases that provide a certain amount of thermal energy. The burner device is associated to a TPV conversion module, which converts at least a portion on this thermal energy amount into electric power.

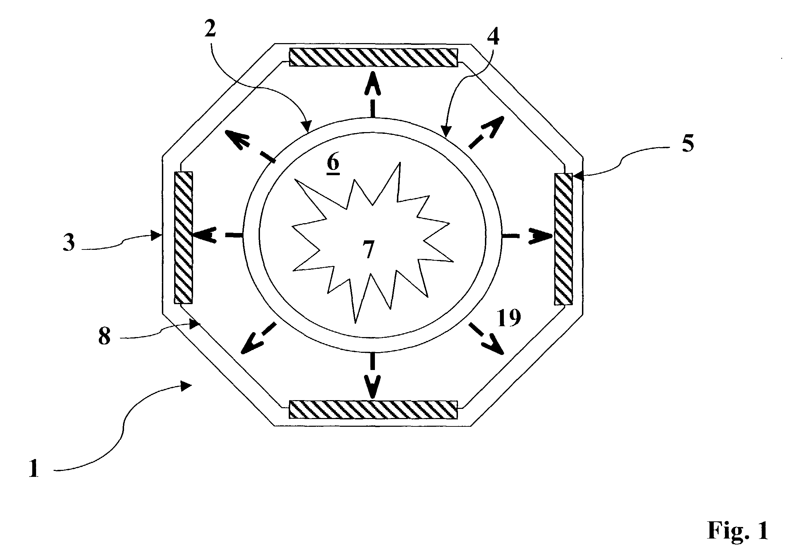

Known TPV conversion modules adopt generally a topology such that illustrated in figure 1, which allows a good energetical coupling with the mentioned burner device.

The TPV conversion module 1 may comprise an emitter body 2, which is generally cylindrically shaped and comprises a through cavity 6 into which the hot gases 7, generated by the mentioned burner device, are allowed to flow. The emitter body 2, is heated by the flow of the hot gases 7. Therefore, the convex external surface 4 of the emitter body 2 emits an IR radiation (dotted arrows 19). The TPV conversion module 1 comprises further a receiver body 3, which surrounds the emitter body 2. A plurality of TPV cells (represented for seek of simplicity by the hatched boxes 5) is disposed on the internal surface 8 of the receiver body 3. Therefore, the TPV cells 5 can receive the IR radiation 19 and convert it into electric power.

Unfortunately, traditional TPV conversion modules are affected by some drawbacks.

A first drawback is due to the fact that the described configuration implies intrinsically a decrease of the power density from the emitter body to the receiver body. In fact, power density is reduced by a factor, which depends on the ratio between the receiver surface and the emitter surface.

Moreover, known TPV conversion modules are further affected by some drawbacks that, in practice, restrict the maximum amount of electric power, which can be generated by the TPV apparatuses, in which they are used.

In fact, the high emissivity materials (e.g. SiC or Kanthal), which are generally adopted for fabricating the emitter, can be subjected to a maximum temperature, which is 1300 °C. Therefore, an intrinsic limitation of the maximum power density, which can be obtained from a single TPV conversion module of the known type, is present.

This limitation cannot be easily overcame increasing the size of the TPV conversion module due to the need of obtaining a uniform temperature distribution. In fact, the common practice has shown that the topology (such that described in figure 1) of the known TPV conversion modules substantially do not allow keeping the overall size under acceptable values.

Therefore, one can say that the known TPV conversion modules, due to their intrinsic structure and topology, often constitute a limitation of the performances that can be obtained by the TPV apparatuses in which they are used. In fact, the TPV apparatuses, which adopt TPV conversion modules of the state of the art, are generally used for generating electric power amounts that are lower than 1 KWe. This fact means that they can be used only for low power distributed generation systems.

The use in more powerful distributed generation systems, implies often to adopt complex assemblies comprising a plurality of different TPV apparatuses. Obviously this fact means a remarkable increase of the installation and of operation costs, which make the TPV technology not very competitive for distributed generation systems for electric power values higher than 1 KWe.

Therefore, the main aim of the present invention is to provide a TPV conversion module, which allows overcoming the above mentioned drawbacks.

Within this aim, another object of the present invention is to provide a TPV conversion module, which can generate a relatively high amount of electric power, at competitive costs.

Another object of the present invention is to provide a TPV conversion module, which is characterised by high levels of total efficiency and power density.

Another object of the present invention is to provide a TPV conversion module, which allows obtaining a TPV apparatus, which is characterised by generated electric power levels higher than 1 KWe.

Another object of the present invention is to provide a TPV conversion module, which allows obtaining a TPV apparatus, suitable for the use in DG, CHP and CHCP systems characterised by electric power levels higher than 1 KWe.

Another object of the present invention is to provide a TPV conversion module, which allows obtaining a TPV apparatus, which is characterised by relatively low installation and operation costs.

Not the least object of the present invention is to provide a TPV conversion module, the fabrication of which is relatively easy and at low costs.

Thus, the present invention provides a TPV conversion module comprising:
- an emitter body for emitting an IR radiation, said emitter body comprising a through cavity , into which hot gases are allowed to flow, so as to heat said emitter body; and
- a receiver body, said receiver body comprising a plurality of TPV cells for converting into electric power at least a portion the IR radiation, which is provided by said emitter body;

The TPV conversion module, according to the present invention, is characterised in that said emitter body comprises at least an emitting wall, said emitting wall comprising at least a concave shaped surface, which emits, in consequence of the heating of said first body, an IR radiation, outwardly from said emitter body.

The TPV conversion module, according to the present invention, allows achieving the intended aims and objects.

In fact, the concave shaped surface of the emitting wall included in the emitter body allows keeping substantially constant or increasing the power density from the emitter body to the receiver body and obtaining high levels of total efficiency of the TPV conversion module.

Moreover, the use of concave shaped emitting surfaces allows obtaining several modular configurations of the TPV conversion module, according to the present invention. In practice, thanks to the use of said concave-shaped emitting surfaces, the geometry of the TPV conversion module, according to the present invention, can be varied modularly, according to the needs. This fact allows integrating a plurality of TPV conversion modules, according to the present invention, in a single low-size conversion assembly. This implies that it is possible to obtain TPV apparatuses that can generate, at relatively low installation and operation costs, high amounts of electric power ( also quite higher than 1 KWe).

For a better understanding of the present invention, reference may be made to the detailed description reported hereinafter, taken in conjunction with the accompanying drawings in which:
figure 1 represents schematically a first configuration of a known TPV conversion;
figure 2 represents schematically a first embodiment of the TPV conversion module according to the present invention;
figure 3 represents schematically a second embodiment of the TPV conversion module according to the present invention;
figure 4 represents schematically a third embodiment of the TPV conversion module according to the present invention;
figure 5 represents schematically a preferred embodiment of a TPV apparatus, which can be obtained using a plurality of TPV conversion modules, according to the present invention;
figure 6 represents schematically a detail of the TPV apparatus illustrated in figure 5.

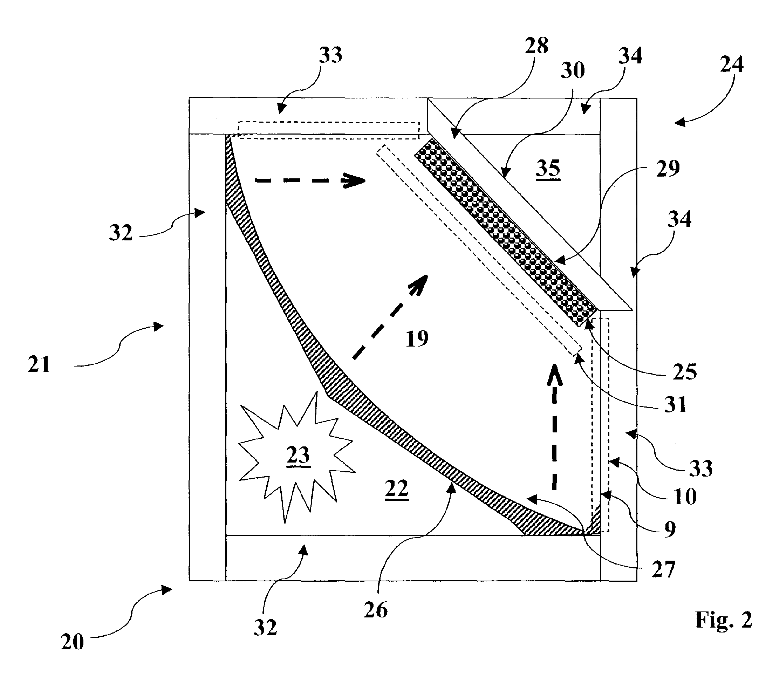

Referring to figure 2, a first embodiment of the TPV conversion module, according to the present invention, is illustrated.

The TPV conversion module, according to the present invention, (reference 20) comprises an emitter body 21, which is aimed at emitting an IR radiation (dotted arrows 19). The emitter body 21 comprises a through cavity 22, into which hot gases 23 are allowed to flow, so as to heat the emitter body 21. The TPV conversion module 20 further comprises a receiver body 24, which comprises a plurality of TPV cells (a portion of which is represented for seek of simplicity by the hatched box 25). The receiver body 24 is aimed at converting into electric power at least a portion the IR radiation 19, which is provided by the emitter body 21.

According to the present invention, the emitter body 21 comprises at least an emitting wall (hatched wall 26), which comprises at least a concave-shaped surface 27. The concave-shaped surface 27 emits, in consequence of the heating of the first body 21, an IR radiation 19 outwardly from the emitter body 21.

As it will appear more evident hereinafter, the concave-shaped surface 27 may be characterised by several kinds of geometry, according to the needs. Preferably, the concave-shaped surface 27 is provided with a quarter of cylinder shape, as illustrate in figure 2. This solution is quite advantageous because it makes easier the concentration of the IR radiation 19 on a predefined target surface.

In order to facilitate the emission of IR radiation, the emitter body or at least the concave shaped surface can comprise layers of high emissivity material such as, for example, SiC or Kanthal.

The plurality of TPV cells can be fabricated according to the techniques known in the state of the art. Preferably, the plurality of TPV cells comprises one or more low band-gap TPV cells, adopting selected semiconductor materials, such as those compounds (Ge, GaAs, GaSb, InGaSb, InGaAsSb and the like) of the III-V groups.

According to an advantageous embodiment of the present invention, the receiver body 24 comprises at least a receiving wall 28, which comprises a first surface 29 positioned, so as to receive the IR radiation 19, which is emitted by the concave shaped surface 27. In practice, the receiver body 24 comprises advantageously a receiving wall 28, which is provided with a first surface 29, positioned so as to constitute the target for the IR radiation 19. Preferably, a portion 25 of the plurality of TPV cells, included in the receiver body, is disposed on the first surface 29 of the receiving wall 28. Advantageously, the receiving wall 28 may comprise a second surface 30, which exchanges heat with a cooling fluid (not illustrated), so as to maintain the operating temperature of the TPV cells 25 within a predefined range.

According to another advantageous embodiment, the receiver body 24 can comprise, in the proximity of the receiving wall 28, intermediate filter means (illustrated by the dotted box 31). The filtering means 31 are aimed at tailoring the spectrum of the IR radiation 19 emitted by the concave-shaped surface 27. Therefore, they can advantageously positioned between the concave-shaped surface 27 and the TPV cells 25.

The TPV conversion module, according to the present invention, can present several different topologies.

According to the embodiment illustrated in figure 2, the emitter body comprises a single emitting wall 26, which is associated with one or more first confinement walls 32, so as to define the through cavity 22. Accordingly to the same embodiment, the receiver body 24 comprises a single receiving wall 28, having the first surface 29 positioned so as to face substantially the concave-shaped surface 27 of the emitting wall 26. Advantageously, the receiver body 24 comprises one or more second confinement walls 33 that associated to the emitting wall 26 and to the receiving wall 28. Advantageously, the second confinement walls 33 can be provided with IR reflecting means (dotted boxes 10) for reducing the dispersions of the IR radiation 19, which is emitted by the emitting wall 26. The IR reflecting means can comprise, for example, mirrors or layers of high emissivity materials (e.g. SiC or Kanthal), disposed advantageously in proximity of the internal surface 9 of the second confinement walls 33. This solution is quite advantageous because it helps to concentrate the radiation on the first surface 29 of the receiver wall 28.

Preferably, the receiver body 26 can also comprise one or more third confinement walls 34 that are associated with the receiving wall 28, so as to define a cooling fluid channel 35.

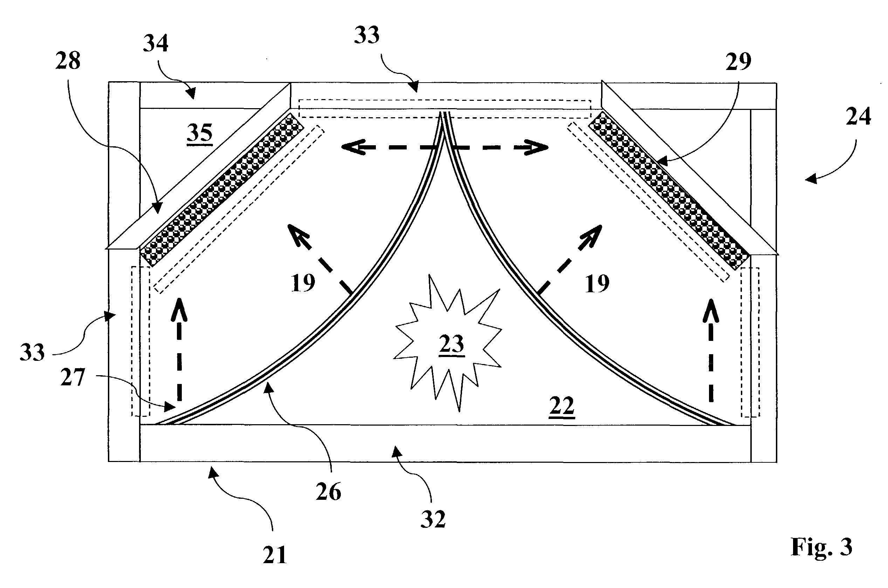

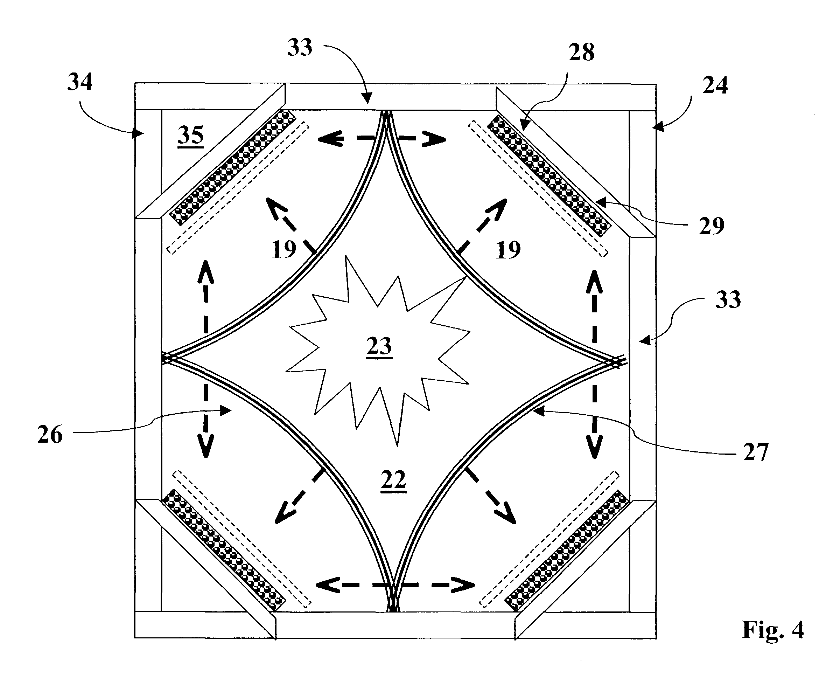

According to other embodiments illustrated in the figures 3 and 4, the emitter body 21 comprises two or more emitting walls 26, that are assembled together, so as to define at least partially the through cavity 22.

The number of emitting walls 26 can vary according to the needs. Preferably, for reasons of symmetry, which allow saving room, the emitter body 21 comprises two emitting walls 26, as illustrated in figure 3, or four emitting walls 26, as illustrated in figure 4. Accordingly, the receiver body 24 can comprise two or more receiving walls 28, for example two receiving walls 28, as illustrated in figure 3, or four receiving walls 28, as illustrated in figure 4.

The first surface of each of the receiving walls 28 is advantageously positioned so as to face substantially the concave-shaped surface 27 of each of the emitting walls 26. Advantageously, as illustrated in figure 4, the emitting walls 26 of the emitter body 21 can be associated with one or more first confinement walls 32, so as to define the through cavity 22. The use of the first confinement walls 32 can be adopted, according to the needs. For example, in the case of the topology illustrated in figure 4, the use of the first confinement walls 32 may be avoided, taking into consideration that the four emitting walls can be assembled so as to define completely the through cavity 22. Preferably, the receiver body 24 can comprise one or more second confinement walls 33 associated to the emitting walls 26 and to the receiving walls 28, which, also in this case, can be provided with the IR reflecting means 10, so as to avoid dispersions of the IR radiation 19.

Moreover, the receiver body 24 can comprise one or more third confinement walls 34 that can be associated with the receiving walls 28, so as to define one or more cooling fluid channels 35.

The practice has shown that the TPV conversion module 20, according to the present invention, allows achieving the intended aims.

In fact, as mentioned above, thanks to the use of concave-shaped emitting surfaces, a TPV conversion module 20 allows keeping substantially constant the power density from the emitter body to the receiver body. This fact means that a TPV conversion module 20 allows generating remarkable amounts of electric power, at quite lower cost if compared with the TPV conversion modules of the state of the art. Moreover, the concentration of IR radiation to target receiving surfaces allows reaching remarkably levels of total efficiency of the TPV conversion modules, according to the present invention.

Further, the use of concave-shape emitting surfaces allows defining the overall structure of a TPV conversion module 20 according to a modular approach, which makes quite flexible its use.

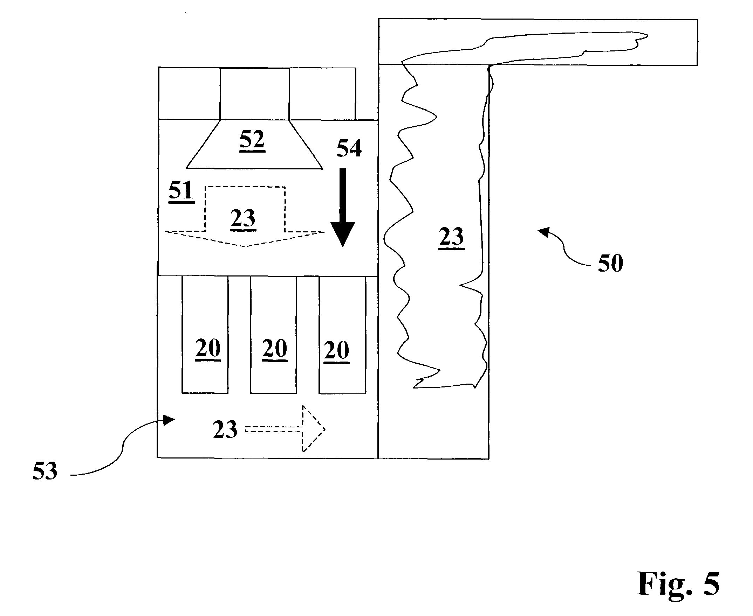

With reference to the figure 5, a TPV apparatus 50 for generating electric power, in which a plurality of TPV conversion modules 20 is included, is illustrated. The TPV apparatus 50 comprises a combustion chamber 51 including a burner device 52, which generates, by means of the combustion of fuel and combustion air, the hot gases 23 providing an amount of thermal power. In order to pre-heat the combustion air, the TPV apparatus can be provided with a recuperator assembly (not illustrated).

Alternatively, the burner device 52 can be preferably provided with an auto-recuperative system (not illustrated) or, preferably, it can comprise an auto-regenerative burner. Further, the burner device 52 can comprise a burner of the flame-type or of the flame-less type.

The TPV apparatus 50 comprises a converter assembly 53, which is associated to the combustion chamber 52 and which converts into electric power at least a portion of the amount of thermal power of the hot gases 23. The converter assembly 53 comprises a plurality of TPV conversion modules 20 that are positioned internally to the combustion chamber 51. Preferably, the TPV conversion modules 20 are positioned along a direction (arrow 54), which is substantially parallel to the main flow direction of the hot gases 23. This allows advantageously the flow of the gases into the through cavity 22 of the emitter body 21 of each of the TPV conversion modules 20.

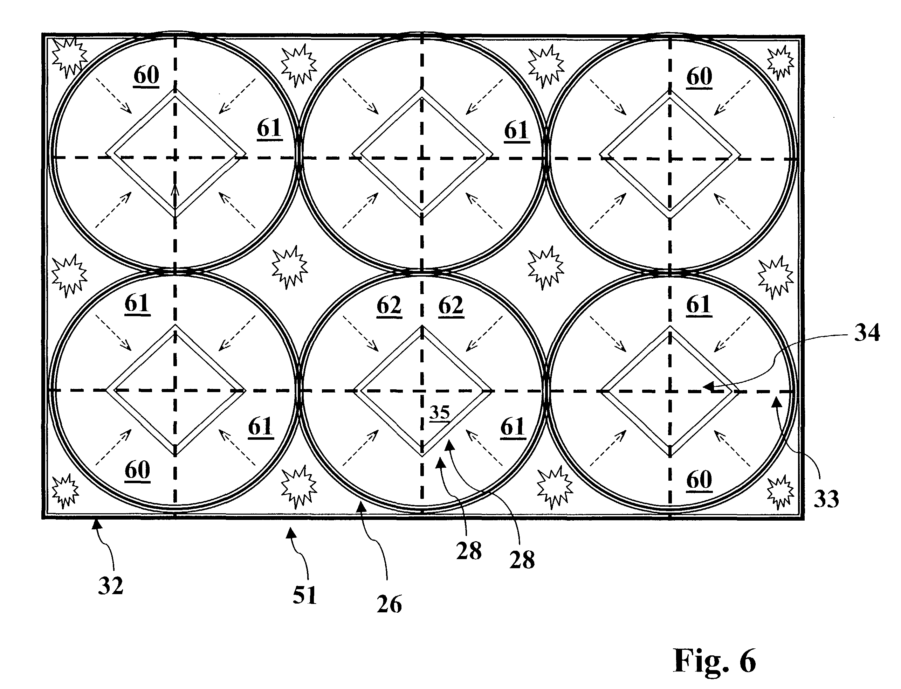

Referring now to the figure 6, a transversal section of the combustion chamber 51 of the TPV apparatus, described in figure 5, is illustrated. As it is possible to notice, the combustion chamber can comprise a plurality of TPV conversion modules that may be structured according to different topologies. For example, they can adopt a single emitting wall 26 such the TPV conversion modules indicated by the reference 60 or two or four emitting walls 26 such the TPV conversion modules indicated respectively by the references 61 and 62. Alternatively, in order to ensure the maximum level integration, according to the needs, TPV conversion modules provided with different topologies may be used. In order to save room and increase the level of integration the use of the second and third confinement walls, respectively indicated by the dotted lines 33 and 34, may be avoided, while the first confinement walls 32 can be advantageously constituted by the walls of the combustion chamber 51. Each emitting wall 26 is preferably coupled to a receiving wall 28, on which a plurality of TPV cells (not illustrated) is disposed. In a preferred embodiment, the receiving walls 29 of different TPV conversion modules can be associated in order to constitute cooling fluid channels 35.

It should be noticed the advantages represented by the embodiment of the combustion chamber 51, illustrated in figure 5. In fact, substantially all the transversal section of the combustion chamber 51 can be occupied by TPV conversion modules of different topologies. A high level of integration can be reached: in practice, the structure of each TPV conversion module can be simplified to an assembly including only the emitting wall 28 and the receiving wall 28. This fact allows obtaining a remarkable reduction of the overall size and of the installation costs.

The use of a plurality of TPV conversion modules, according to the present invention, allows obtaining easily TPV apparatuses that are able to generate relatively high amounts of electric power (also quite higher than 1 KWe) keeping relatively low, at the same time, the installation and the operation costs.

The total efficiency and the power density of the TPV apparatuses that can be obtained using the TPV conversion modules, according to the present invention, has proven to be relatively high, if compared to the TPV apparatuses of the state of the art.

The TPV apparatuses that can be obtained using the TPV modules, according to the present invention, have proven to be particularly suitable for the use in DG, CHP and CHCP systems, characterised by electric power levels higher than 1 KWe.

Moreover, the fabrication of the TPV apparatuses that can be obtained using the TPV conversion modules, according to the present invention, has proven to be relatively easy and at low costs.

The TPV conversion module, according to the present invention, thus conceived is susceptible of numerous modifications and variations, all of which are within the scope of the inventive concept. All the details may also be replaced with other technically equivalent elements. In practice, the materials employed, so long as they are compatible with the specific use, as well as the dimensions, may be any according to the requirements and to the state of the art.

## Claims

1. A TPV conversion module comprising:
- an emitter body for emitting an IR radiation, said emitter body comprising a through cavity , into which hot gases are allowed to flow, so as to heat said emitter body; and
- a receiver body, said receiver body comprising a plurality of TPV cells for converting into electric power, at least a portion the IR radiation, which is provided by said emitter body;
**characterised in that** said emitter body comprises at least an emitting wall, said emitting wall comprising at least a concave-shaped surface, said concave-shaped surface emitting, in consequence of the heating of said emitter body, an IR radiation outwardly from said emitter body.

2. A TPV conversion module, according to the claim 1, **characterised in that** the concave-shaped surface of said emitting wall is provided with a quarter of cylinder shape.

3. A TPV conversion module, according to one or more of the previous claims, **characterised in that** said receiver body comprises at least a receiving wall, said receiving wall comprising at least a first surface positioned so as to receive the IR radiation emitted by the concave shaped surface of said emitting wall.

4. A TPV conversion module, according to the claim 3, **characterised in that** a portion of said plurality of TPV cells is disposed on said first surface.

5. A TPV conversion module, according to one or more of the claims from 2 to 4, **characterised in that** said receiving wall comprises a second surface, said second surface exchanging heat with a cooling fluid, so as to maintain the operating temperature of the TPV cells disposed on said first surface within a predefined range.

6. A TPV conversion module, according to one or more of the previous claims, **characterised in that**, said plurality of TPV cells comprises one or more low band-gap TPV cells.

7. A TPV conversion module, according to one or more of the previous claims, **characterised in that** said receiver body comprises, in the proximity of said receiving wall, intermediate filter means for tailoring the spectrum of the IR radiation emitted by said concave-shaped surface.

8. A TPV conversion module according to the previous claims, **characterised in that** said emitter body comprises a single emitting wall, said emitting wall being associated to one or more first confinement walls, so as to define said through cavity.

9. A TPV conversion module, according to the claim 8, **characterised in that** the second body of the receiver body comprises a single receiving wall, the first surface of said receiving wall being positioned so as to face substantially the concave shaped surface of said emitting wall.

10. A TPV conversion module, according to the claim 9, **characterised in that** said receiver body comprises one or more second confinement walls, said second confinement walls being associated to said emitting wall and to said receiving wall, so as to avoid dispersions of the IR radiation emitted by said emitting wall.

11. A TPV conversion module, according to one or more of the claims from 9 to 10, **characterised in that** said receiver body comprises one or more third confinement walls, said third confinement walls being associated with said receiving wall so as to define a cooling fluid channel.

12. A TPV conversion module according to the claims from 1 to 7, **characterised in that** said emitter body comprises two or more emitting walls, said emitting walls being assembled together, so as to define at least partially said through cavity.

13. A TPV conversion module, according to the claim 12, **characterised in that** said receiver body comprises two or more receiving walls, the first surface of each of said receiving walls being positioned so as to face substantially the concave shaped surface of each of said emitting walls.

14. A TPV conversion module, according to the claim 13, **characterised in that** said receiver body comprises one or more second confinement walls, said second confinement walls being associated to said emitting walls and to said receiving walls, so as to avoid dispersions of the IR radiation emitted by said emitting walls.

15. A TPV conversion module, according to one or more of the claims from 13 to 14, **characterised in that** said receiver body comprises one or more third confinement walls, said third confinement walls being associated with said receiving walls, so as to define one or more cooling fluid channels.

16. A TPV conversion module, according to one or more of the claims from 12 to 15, **characterised in that** said emitting walls are associated with one or more first confinement walls, so as to define said through cavity.

17. A TPV conversion module according to one or more of the claims from 12 to 16 **characterised in that** said emitter body comprises two emitting walls and said receiver body comprises two receiving walls.

18. A TPV conversion module according to one or more of the claims from 12 to 16 **characterised in that** said emitter body comprises four emitting walls and said receiver body comprises four receiving walls.

19. A TPV conversion module, according to the claim 10 and to the claim 14, **characterised in that** said second confinement walls comprise IR reflecting means, for reducing the dispersion of IR radiation.

20. A TPV conversion module, according to one or more of the previous claims, **characterised in that** the concave shaped surface of said one or more emitting walls is provided with a quarter of cylinder shape.

21. A TPV apparatus for generating electric power **characterised in that** it comprises a TPV conversion module, according to one or more previous claims.

22. A TPV apparatus for generating electric power comprising:
- a combustion chamber comprising a burner device, said burner device generating, by means of the combustion of fuel and combustion air, hot gases providing an amount of thermal power;
- a converter assembly, said converted assembly being associated to said combustion chamber and converting at least a portion of said amount of thermal power into electric power;
**characterised in that**, said converter assembly comprises, positioned internally to said combustion chamber, a plurality of TPV conversion modules, according to one or more of the claims from 1 to 21.

23. A TPV apparatus, according to the claim 22, **characterised in that** said one or more TPV conversion modules are positioned along a direction, which is substantially parallel to the main flow direction of said hot gases.

24. A TPV apparatus, according to the one or more of the claims from 22 to 23, **characterised in that** said TPV conversion modules are integrated, so as to avoid the use of said second confinement walls and said third confinement walls.

25. A TPV apparatus, according to the one or more of the claims from 22 to 24, **characterised in that** the receiver bodies of one or more of said TPV conversion modules are assembled together, so as to constitute one or more cooling fluid channels.

26. A TPV apparatus, according to one or more of the claims from 22 to 25, **characterised in that** it comprises a recuperator assembly for pre-heating, by means of the residual heat of said hot gases, said combustion air.

27. A TPV apparatus, according to one or more of the claims from 22 to 25, **characterised in that**, said burner device is provided with a heat auto-recuperative system.

28. A TPV apparatus, according to one or more of the claims from 22 to 25, **characterised in that**, said burner device burner comprises an auto-regenerative burner.

29. A TPV apparatus, according to one or more of the claims from 22 to 28, **characterised in that**, said burner device burner comprises a burner of the flame-type.

30. A TPV apparatus, according to one or more of the claims from 22 to 28, **characterised in that**, said burner device burner comprises a burner of the flameless-type.

31. A TPV apparatus, according to one or more of the claims from 22 to 30, **characterised in that** it generates an amount of electric power, which is higher than 1 KWe.

32. A DG system, **characterised in that** it comprises at least a TPV apparatus, according to one or more of the claims from 22 to 31.

33. A CHP system, **characterised in that** it comprises at least a TPV apparatus, according to one or more of the claims from 22 to 31.

34. A CHCP system, **characterised in that** it comprises at least a TPV apparatus, according to one or more of the claims from 22 to 31.
